# EUROPÄISCHE PATENTANMELDUNG

(11) **EP 2 657 120 A1**
(43) Veröffentlichungstag der Anmeldung: **30.10.2013**
(21) Anmeldenummer: 13156554.1
(22) Anmeldetag: 25.02.2013
(51) Int. Cl.: B62M 6/70, B62M 6/60

(54) **Elektrofahrrad und Antriebsbausatz für ein Elektrofahrrad**

(30) Priorität: 25.04.2012 DE 102012206865
(71) Anmelder: ROBERT BOSCH GMBH, 70442 Stuttgart (DE)
(72) Erfinder: Benzel, Hubert, 72124 Pliezhausen (DE)

(57) **Zusammenfassung**

Die vorliegende Erfindung betrifft ein Elektrofahrrad (1), umfassend eine Tretkurbel (7) mit einem ersten Transmissionsrad (21), ein angetriebenes Rad (4), insbesondere Hinterrad, mit einem zweiten Transmissionsrad (22), einen Elektromotor (11) mit einem dritten Transmissionsrad (23), und ein das erste, zweite und dritte Transmissionsrad (21, 22, 23) umschlingendes, endlos umlaufendes Antriebsmittel (15).

## Beschreibung

### Stand der Technik

Die vorliegende Erfindung betrifft ein Elektrofahrrad sowie einen Antriebsbausatz zum elektrischen Antrieb eines Fahrrades.

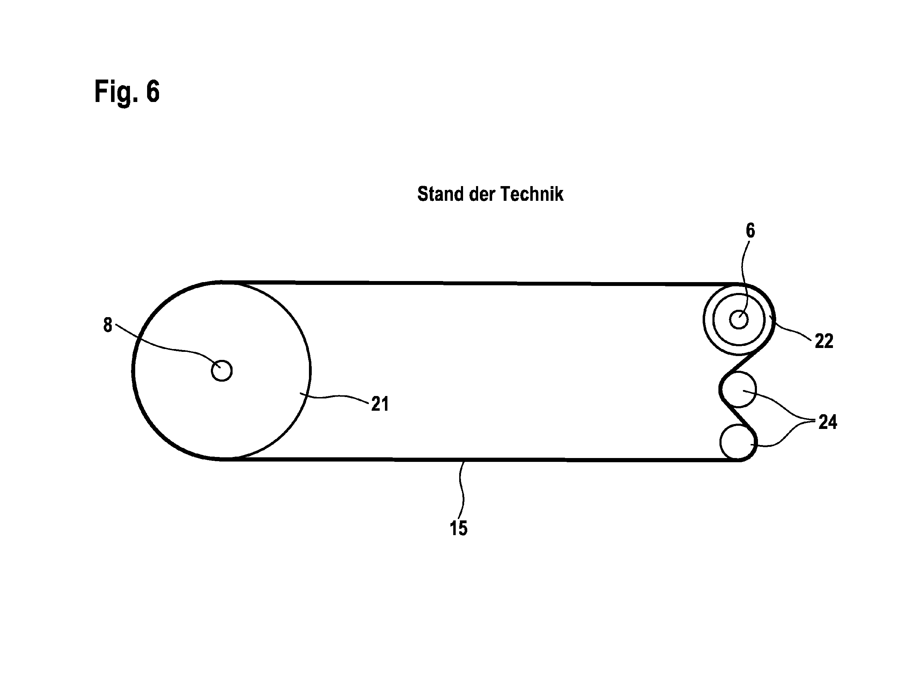

Der Stand der Technik kennt unterschiedlichste Ausbildungen von Elektrofahrrädern. Dabei wird die Antriebskraft des Elektromotors entweder zur Unterstützung des Fahrers verwendet oder aber der Elektromotor ist der alleinige Antrieb des Fahrrades. Figur 6 zeigt den üblichen Antrieb eines Fahrrades. Zu sehen ist ein erstes Kettenrad 21 koaxial mit einer Drehkurbelwelle 8. Im hinteren Bereich befindet sich eine Hinterradaufhängung 6 mit einem koaxialen zweiten Kettenrad 22. Eine Kette 15 ist endlos ausgebildet und umschlingt die beiden Kettenräder 21, 22. Um ein Durchhängen der Kette 15 zu vermeiden, ist ein Kettenspanner 24 angeordnet. Mit einem nicht dargestellten zusätzlichen Elektromotor wird üblicherweise direkt ein Drehmoment auf das erste Kettenrad 21 eingeleitet. Alternativ dazu gibt es Nabenmotoren, die direkt ein Drehmoment auf die hintere Radaufhängung 6 einleiten.

### Offenbarung der Erfindung

Das erfindungsgemäße Elektrofahrrad mit den Merkmalen des Anspruchs 1 zeigt einen sehr einfach und kostengünstig ausgestalteten elektrischen Antrieb und/oder Zusatzantrieb für das Fahrrad. Erfindungsgemäß wird der Elektromotor direkt in das, üblicherweise bei jedem Fahrrad vorhandene umlaufende Antriebsmittel eingebunden. Dadurch sind übliche Fahrradkomponenten, wie beispielsweise eine Kettenschaltung, eine Nabenschaltung oder ovale Kettenräder weiterhin nutzbar. Die Umrüstung eines bestehenden Fahrrades zum erfindungsgemäßen Elektrofahrrad ist relativ einfach und kann selbst von Laien durchgeführt werden. Es sind sowohl Fahrräder mit Ketten- als auch mit Nabenschaltung umrüstbar. All diese Vorteile werden erreicht durch ein Elektrofahrrad umfassend eine Tretkurbel mit einem ersten Transmissionsrad und ein angetriebenes Rad, insbesondere Hinterrad, mit einem zweiten Transmissionsrad. Des Weiteren ist ein Elektromotor mit einem dritten Transmissionsrad vorgesehen. Für den gesamten Antrieb ist lediglich ein endlos umlaufendes Antriebsmittel vorgesehen, das alle drei Transmissionsräder umschlingt. In bevorzugter Ausführung sind die drei Transmissionsräder Kettenräder und das Antriebsmittel ist eine Kette. Allerdings umfasst der Begriff "umlaufendes Antriebsmittel" auch Keil- und Zahnriemen. In entsprechender Weise sind dann die Transmissionsräder als Keil- oder Zahnriemenscheiben ausgebildet.

Die Unteransprüche zeigen bevorzugte Weiterbildungen der Erfindung.

In bevorzugter Ausführung ist vorgesehen, dass das Antriebsmittel durch das dritte Transmissionsrad um einen Winkel α umgelenkt wird. Dieser Winkel α beträgt vorzugsweise 90°. Das dritte Transmissionsrad mit dem Elektromotor ist also so angeordnet, dass die wirkenden Kräfte, nämlich die Tretkraft und die elektrische Antriebskraft, senkrecht aufeinanderstehen. Der Winkel α ist also zwischen dem zu- und ablaufenden Antriebsmittel am dritten Transmissionsrad ausgebildet. Infolgedessen, dass am dritten Transmissionsrad die Tretkraft und die elektrische Antriebskraft senkrecht aufeinanderstehen, kann hier in nur einer Richtung die Tretkraft gemessen werden. Die Tretkraft wiederum ist der beste Indikator zum Erkennen des "Fahrerwillens". Basierend auf der ermittelten Tretkraft kann errechnet werden, wie viel Unterstützungsleistung vom Elektromotor zu leisten ist. Leichte Abweichungen vom Winkel α und somit leichte Messfehler bzgl. Tretkraft sind tolerierbar, so dass der Winkel α zwischen 80° und 100°, vorzugsweise zwischen 85° und 95°, besonders vorzugsweise 90°, beträgt. In besonders bevorzugter Ausführung ist vorgesehen, dass die über die Tretkurbel auf das dritte Transmissionsrad aufgebrachte Tretkraft mit einem Sensor gemessen wird. Vorteilhafterweise befindet sich dieser Sensor an einer Aufhängung des Elektromotors oder an einem Lager im Elektromotor oder am dritten Transmissionsrad. Mit dem Sensor muss lediglich die Kraft in einer Richtung gemessen werden, da bevorzugt das Antriebsmittel durch das dritte Transmissionsrad um den Winkel α umgelenkt wird. Als Sensor kommt bevorzugt ein sog. iBolt-Sensor zum Einsatz.

Zum Vorwärtsfahren des Elektrofahrrades ist eine Umlaufrichtung des Antriebsmittels definiert. Das dritte Transmissionsrad und der zugehörige Elektromotor sind bevorzugt in Umlaufrichtung nach dem zweiten Transmissionsrad und vor dem ersten Transmissionsrad angeordnet. Beim Treten durch den Fahrer wirkt somit über das endlos umlaufende Antriebsmittel eine Zugkraft auf das dritte Transmissionsrad. Auch die vom Elektromotor eingeleitete Kraft wirkt eine Zugkraft über das Antriebsmittel auf das zweite, hintere Transmissionsrad. Durch den Winkel α, der vorzugsweise bei 90° liegt, steht die Tretkraft senkrecht zur elektrischen Antriebskraft am dritten Transmissionsrad.

Es ist bevorzugt vorgesehen, dass herkömmliche Kettenschaltungen am erfindungsgemäßen Elektrofahrrad verwendet werden. Hierzu kann das erste und/oder zweite Transmissionsrad jeweils als eine Kassette koaxial angeordneter Transmissionsräder ausgebildet sein.

Ferner ist bevorzugt vorgesehen, dass die Achse des dritten Transmissionsrades über der Achse des ersten Transmissionsrades und in Fahrrichtung hinter der Achse des ersten Transmissionsrades angeordnet ist. Denkt man sich eine imaginäre Linie zwischen der Achse des ersten Transmissionsrades, insbesondere der Tretkurbelwelle, und der Achse des zweiten Transmissionsrades, insbesondere der Hinterradaufhängung, so befindet sich die Achse des dritten Transmissionsrades bevorzugt über dieser imaginären Linie. Des Weiteren befindet sich die Achse des dritten Transmissionsrades in Fahrtrichtung betrachtet hinter einer imaginären vertikalen Linie durch die Achse des ersten Transmissionsrades. Der Elektromotor mit dem dritten Transmissionsrad ist also zwischen der Tretkurbel und der Hinterradachse aufgehängt. Dadurch läuft das Antriebsmittel in das erste Transmissionsrad wie üblich ein, und eine herkömmliche Kettenschaltung kann verwendet werden.

In alternativer Ausbildung kann die Achse des dritten Transmissionsrades unterhalb der Achse des ersten Transmissionsrades angeordnet werden.

Dadurch ist ein in vertikaler Richtung sehr schmal bauender Antrieb gegeben. Insbesondere befindet sich hierbei die Achse des dritten Transmissionsrades in horizontaler Richtung zwischen der Achse des ersten und des zweiten Transmissionsrades.

Erfindungsgemäß ist das erste Transmissionsrad der Tretkurbel zugeordnet. Das bedeutet, dass die Tretkurbel in erster Linie das erste Transmissionsrad antreibt und nur indirekt über das Antriebsmittel auch das zweite und dritte Transmissionsrad betätigt. Besonders bevorzugt ist die Tretkurbelwelle koaxial mit dem ersten Transmissionsrad angeordnet. Allerdings kann sich auch zwischen der Tretkurbelwelle und dem ersten Transmissionsrad ein kleines, in die Tretkurbelanordnung integriertes Getriebe befinden. Das dritte Transmissionsrad ist in einfachster Ausbildung koaxial mit dem Rotor des Elektromotors verbunden. Allerdings kann auch hier eine weitere Getriebestufe zwischen dem Elektromotor und dem dritten Transmissionsrad angeordnet werden. Das zweite Transmissionsrad ist in einfachster Ausführung koaxial mit der Achse des Hinterrades verbunden. Hier ist beispielsweise zusätzlich eine Nabenschaltung möglich, so dass die Kraft vom zweiten Transmissionsrad über die Nabenschaltung auf das Hinterrad übertragen wird.

Die Erfindung umfasst des Weiteren einen Antriebsbausatz zum elektrischen Antrieb eines Fahrrades. Besonders bevorzugt ist dieser Antriebsbausatz als Nachrüstbausatz ausgebildet. Mit diesem Antriebsbausatz oder Nachrüstbausatz ist es möglich, ein herkömmliches Fahrrad oder herkömmliche Fahrradkomponenten zu dem erfindungsgemäßen Elektrofahrrad umzubauen.

Die im Rahmen des erfindungsgemäßen Elektrofahrrads beschriebenen vorteilhaften Ausgestaltungen und Unteransprüche finden entsprechend vorteilhafte Anwendung auf den erfindungsgemäßen Antriebsbausatz.

Im Detail wird der Antriebsbausatz wie folgt definiert: Es handelt sich um einen Antriebsbausatz zum elektrischen Antrieb eines Fahrrades, wobei das Fahrrad einen Fahrradrahmen, eine Tretkurbel mit einem ersten Transmissionsrad, ein angetriebenes Rad mit einem zweiten Transmissionsrad, und ein das erste und zweite Transmissionsrad umschlingendes, endlos umlaufendes Antriebsmittel umfasst. Dieses Fahrrad soll mit dem erfindungsgemäßen Antriebsbausatz, insbesondere Nachrüstbausatz, zum Elektrofahrrad aufgerüstet werden. Der Antriebsbausatz umfasst hierzu einen Träger mit Montageelementen. Diese Montageelemente sind zur Montage des Trägers am Fahrradrahmen ausgebildet. Des Weiteren umfasst der Antriebsbausatz einen im Träger angeordneten Elektromotor mit einem dritten Transmissionsrad. Das dritte Transmissionsrad ist zur Umschlingung durch das Antriebsmittel angeordnet. Der erfindungsgemäße Träger mit den Montageelementen definiert die Art und Position, wie der gesamte Antriebsbausatz in einem Fahrrad montierbar ist. Die Position des Elektromotors bzw. die mehreren möglichen Positionen des Elektromotors innerhalb des Trägers definieren somit die letztendliche Position des Elektromotors mit dem dritten Transmissionsrad innerhalb des Fahrrades. Dadurch ist mit dem erfindungsgemäßen Antriebsbausatz letztendlich vorgegeben, dass das dritte Transmissionsrad zur Umschlingung durch das Antriebsmittel angeordnet ist. Erfindungsgemäß wird nur ein gemeinsames Antriebsmittel für alle drei Transmissionsräder verwendet.

Bevorzugt ist in dem Träger eine Batterie und/oder eine Batterieaufnahme angeordnet. Unter "Batterie" ist auch ein Akkumulator zu verstehen. Die Batterie dient zum Betreiben des Elektromotors. Darüber hinaus kann auch der Elektromotor generatorisch betrieben werden und die Batterie aufladen.

Besonders bevorzugt ist die Position des Elektromotors samt dem dritten Transmissionsrad im Träger verstellbar. Dadurch kann sichergestellt werden, dass, auch bei mehreren verschiedenen Fahrradtypen, das Antriebsmittel am dritten Transmissionsrad um den Winkel α, vorzugsweise 90°, umgelenkt wird, und somit eine sehr einfache und effiziente Messung der vom Fahrer eingebrachten Tretkraft möglich ist.

Bevorzugt sind zumindest drei zueinander versetzte Montageelemente am Träger vorgesehen. Die Montageelemente sind vorzugsweise an den Ecken eines imaginären Dreiecks angeordnet. Die Befestigung des Trägers erfolgt bevorzugt an den Lagern von Kettenrad und Ritzel. Dabei kann eine Seite des Trägers an der Hinterachse oder deren Befestigung im Rahmen befestigt werden und die andere Seite des Trägers wird am Tretlager bzw. am Rahmen nahe des Tretlagers befestigt.

Als Kraftsensoren kommen insbesondere iBold-Sensoren zum Einsatz. Mit diesen Sensoren wird in Richtung zum Kettenrad die Tretkraft gemessen. Abhängig von der Tretkraft wird die Antriebskraft bestimmt und mit einer vom Fahrer einstellbaren Unterstützungsstufe bewertet. Insbesondere ist hierzu eine Bedienvorrichtung, beispielsweise am Lenker des Fahrrades, vorgesehen. Diese Bedienvorrichtung kommuniziert mit der Steuerung und/oder dem Elektromotor entweder über eine drahtgebundene Verbindung oder über eine Funkverbindung, insbesondere Bluetooth. Alternativ zur Montage der Bedienvorrichtung am Lenker ist es auch vorgesehen, dass die Bedienvorrichtung am Rahmen unterhalb des Sattels montiert wird. Dies ermöglicht eine sehr kostengünstige Montage und es bedarf keiner umständlichen Verlegung von Kabeln.

In dem Träger sind insbesondere der Elektromotor, der Sensor zum Messen der über die Tretkurbel auf das dritte Transmissionsrad aufgebrachten Tretkraft, die elektrische Steuerung bzw. Schaltung und die Batterie angeordnet. So kann der Träger an beliebigen Fahrrädern montiert werden. Die Energie für den Elektromotor und die Steuerung kommt aus der Batterie bzw. dem Akkumulator, insbesondere einer Lithium-lonen-Batterie.

Vorzugsweise ist der Sensor an einer Aufhängung des Elektromotors oder an einem Lager im Elektromotor oder an dem dritten Transmissionsrad angeordnet, wobei der Elektromotor, das Lager des Elektromotors und das dritte Transmissionsrad an oder im Träger angeordnet sind.

Beim Einbau des Nachrüstsatzes in ein bestehendes Fahrrad ist eine längere Kette nötig. Der Antriebsbausatz umfasst deshalb bevorzugt ein entsprechend langes Antriebsmittel oder eine Verlängerung, insbesondere eine Kettenverlängerung mit einem Kettenschloss.

### Kurze Beschreibung der Zeichnungen

Nachfolgend werden Ausführungsbeispiele der Erfindung unter Bezugnahme auf die begleitende Zeichnung im Detail beschrieben. In der Zeichnung zeigt:
- Figur 1: ein erfindungsgemäßes Elektrofahrrad gemäß einem ersten Ausführungsbeispiel,
- Figur 2: ein erstes Detail des Antriebs des erfindungsgemäßen Elektrofahrrads gemäß dem ersten Ausführungsbeispiel,
- Figur 3: ein zweites Detail des erfindungsgemäßen Elektrofahrrads gemäß dem ersten Ausführungsbeispiel,
- Figur 4: den Antrieb eines erfindungsgemäßen Elektrofahrrads gemäß einem zweiten Ausführungsbeispiel,
- Figur 5: den Antrieb eines erfindungsgemäßen Elektrofahrrads gemäß einem dritten Ausführungsbeispiel, und
- Figur 6: den Antrieb eines vorbekannten Fahrrades.

### Ausführungsformen der Erfindung

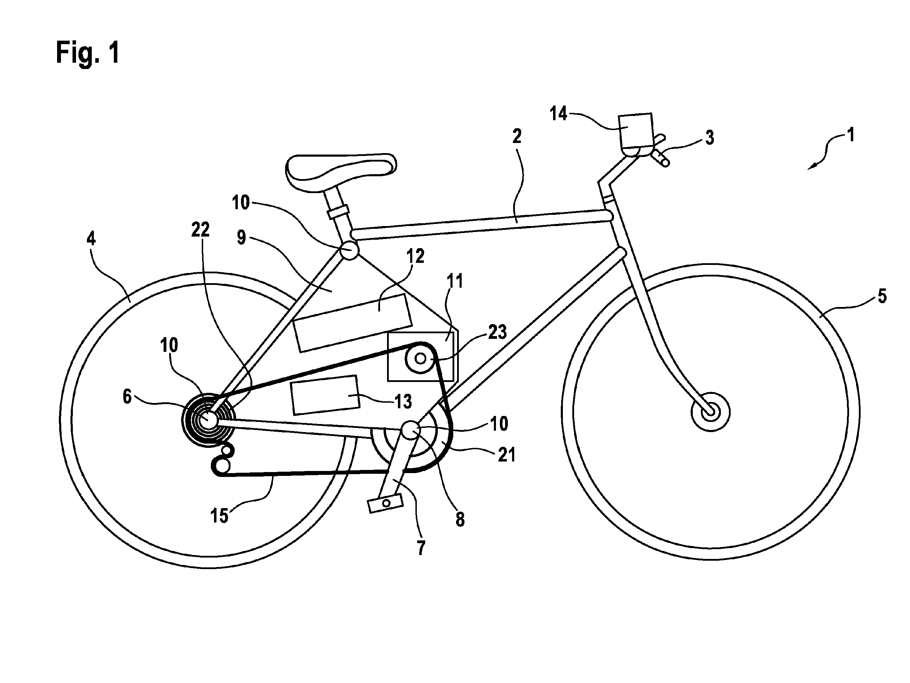

Im Folgenden wird anhand der Figuren 1 bis 3 ein erstes Ausführungsbeispiel des Elektrofahrrades 1 beschrieben.

Gemäß Figur 1 umfasst das Elektrofahrrad 1 einen Fahrradrahmen 2, einen Lenker 3, ein angetriebenes Hinterrad 4 und ein Vorderrad 5. Das Hinterrad 4 ist über eine Hinterradaufhängung 6 mit dem Fahrradrahmen 2 verbunden. Des Weiteren umfasst das Elektrofahrrad 1 zwei Tretkurbeln 7, die vom Fahrer getreten werden. Die Tretkurbeln 7 befinden sich an einer Tretkurbelwelle 8.

In den Fahrradrahmen 2 ist ein Träger 9 montiert. Der Träger 9 weist drei Montageelemente 10 auf. Ein Montageelement 10 ist an der Hinterradaufhängung 6 montiert. Ein weiteres Montageelement 10 ist am Fahrradrahmen unter dem Sattel montiert. Das dritte Montageelement 10 ist an der Tretkurbelwelle 8 montiert.

Im Träger 9 sind ein Elektromotor 11 , ein Akkumulator 12 und eine elektrische Steuerung 13 (auch Schaltung genannt) angeordnet. Der Elektromotor 11 wird von dem Akkumulator 12 gespeist bzw. kann der Elektromotor 11 auch generatorisch betrieben werden und somit den Akkumulator 12 aufladen. Die Steuerung 13 steuert den Elektromotor 11 an. Am Lenker 3 befindet sich eine Bedienvorrichtung 14. Über diese Bedienvorrichtung 14 kann der Fahrer verschiedene Programme oder Schaltstufen auswählen und somit die Steuerung 13 beeinflussen.

An der Tretkurbelwelle 8 befindet sich ein erstes Transmissionsrad 21, ausgebildet als Kettenradkassette. An der Hinterradaufhängung 6 befindet sich ein zweites Transmissionsrad 22, ebenfalls ausgebildet als Kettenradkassette. Der Elektromotor 11 treibt direkt ein drittes Transmissionsrad 23, ausgebildet als Kettenrad, an. Ein gemeinsames Antriebsmittel 15, ausgebildet als Kette, umschlingt endlos das erste, zweite und dritte Transmissionsrad 21 - 23.

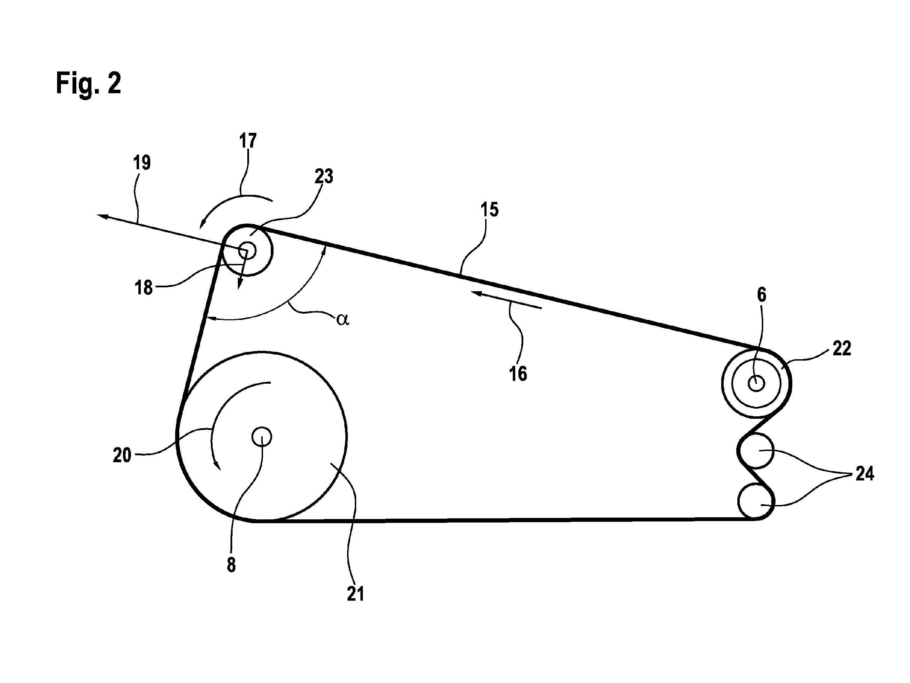

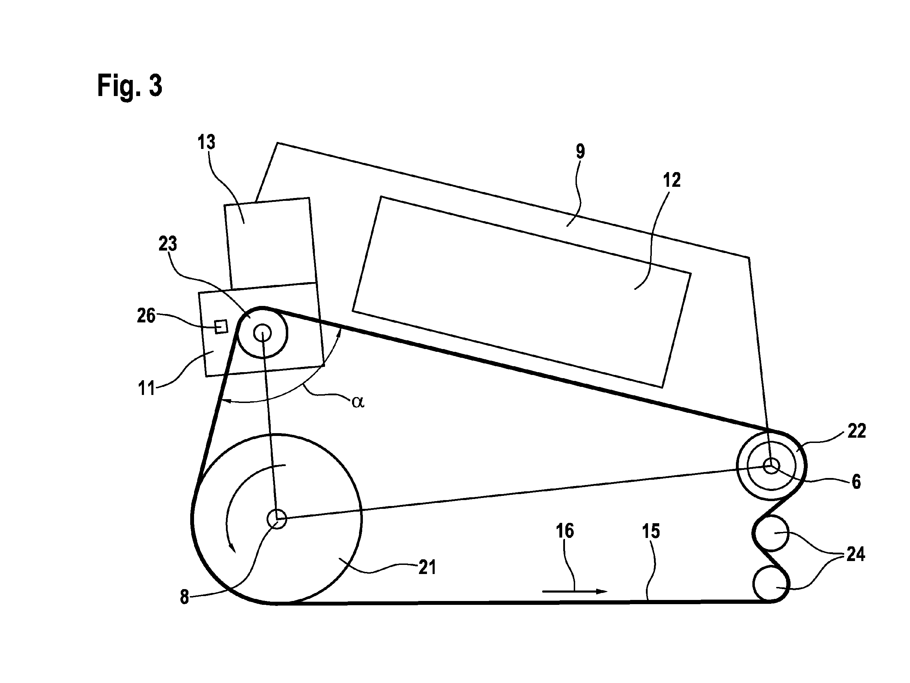

In den Figuren 2 und 3 ist der Antrieb des Elektrofahrrades 1 im Detail dargestellt. Zu beachten ist, dass in den Figuren 2 und 3 das Fahrrad, bezüglich Figur 1, von der anderen Seite dargestellt ist. Figur 1 zeigt in vereinfachter Darstellung die Tretkurbelwelle 8 mit dem ersten Transmissionsrad 21 und die Hinterradaufhängung 6 mit dem zweiten Transmissionsrad 22. Des Weiteren ist das vom Elektromotor 11 angetriebene dritte Transmissionsrad 23 dargestellt. Zum Spannen des Antriebsmittels 12 ist eine Kettenspannung 24 vorgesehen. Über die Tretkurbel 7 wird das eingezeichnete Tretmoment 20 in das erste Transmissionsrad 21 eingeleitet. Zur Unterstützung des Antriebs des Fahrrades leistet der Elektromotor 11 ein Motormoment 17, das an dem dritten Transmissionsrad 23 eingeleitet wird. Über das Antriebsmittel 15 bewirkt das Tretmoment 20 eine Tretkraft 18 am dritten Transmissionsrad 23. Das Motormoment 17 bewirkt am dritten Transmissionsrad die eingezeichnete Motorantriebskraft 19. Die Motorantriebskraft 19 steht mit Winkel α senkrecht zur Tretkraft 18. Der gleiche Winkel α ist am dritten Transmissionsrad 23 auch zwischen ein- und auslaufendem Antriebsmittel 16 zu messen.

Figur 3 zeigt zusätzlich zur Figur 2 noch den Träger 9 mit dem Akkumulator 12, dem Elektromotor 11 und der Steuerung 13. Gemäß Figur 3 kann die Steuerung 13 an beliebiger Stelle innerhalb des Trägers 9 angeordnet werden. Darüber hinaus zeigt Figur 3 einen Sensor 26 an der Aufhängung des Elektromotors 11. Wie anhand von Figur 2 dargestellt wurde, stehen die Tretkraft 18 und die Motorantriebskraft 19 am dritten Transmissionsrad 23 senkrecht aufeinander. Deshalb kann mit einem sehr einfach ausgestalteten Sensor 26 die Tretkraft 18 eindimensional gemessen werden. Anhand der gemessenen Tretkraft 18 wird ermittelt, wie viel Unterstützungskraft der Elektromotor 11 leisten soll.

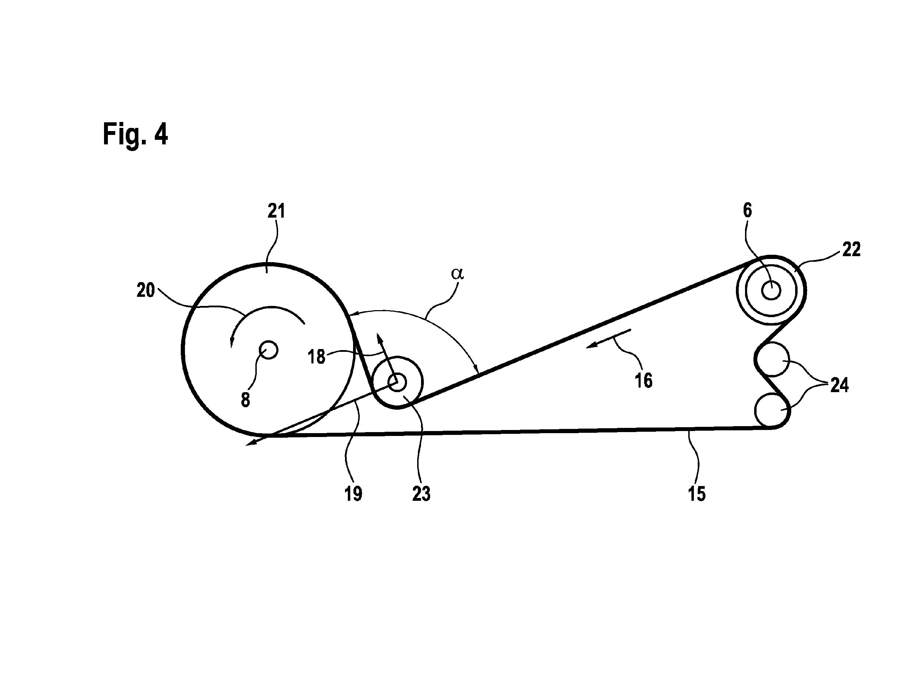

Figur 4 zeigt ein zweites Ausführungsbeispiel des Elektrofahrrades 1. Gleiche bzw. funktional gleiche Bauteile sind in allen Ausführungsbeispielen mit denselben Bezugszeichen versehen. Der Übersichtlichkeit halber ist in Figur 4 nur der Antriebsstrang des Elektrofahrrades 1 dargestellt. In dem Ausführungsbeispiel nach Figur 4 befindet sich das dritte Transmissionsrad 23, insbesondere die Achse des dritten Transmissionsrades23, unterhalb einer, annähernd horizontalen, imaginären Linie zwischen der Tretkurbelwelle 8 und der Hinterradaufhängung 6. Des Weiteren befindet sich das dritte Transmissionsrad 23 zwischen dem ersten und zweiten Transmissionsrad 21, 22. Durch diese Anordnung des Elektromotors 11 mit dem dritten Transmissionsrad 23 ist ein sehr kompakter Aufbau des gesamten Antriebsstrangs gegeben.

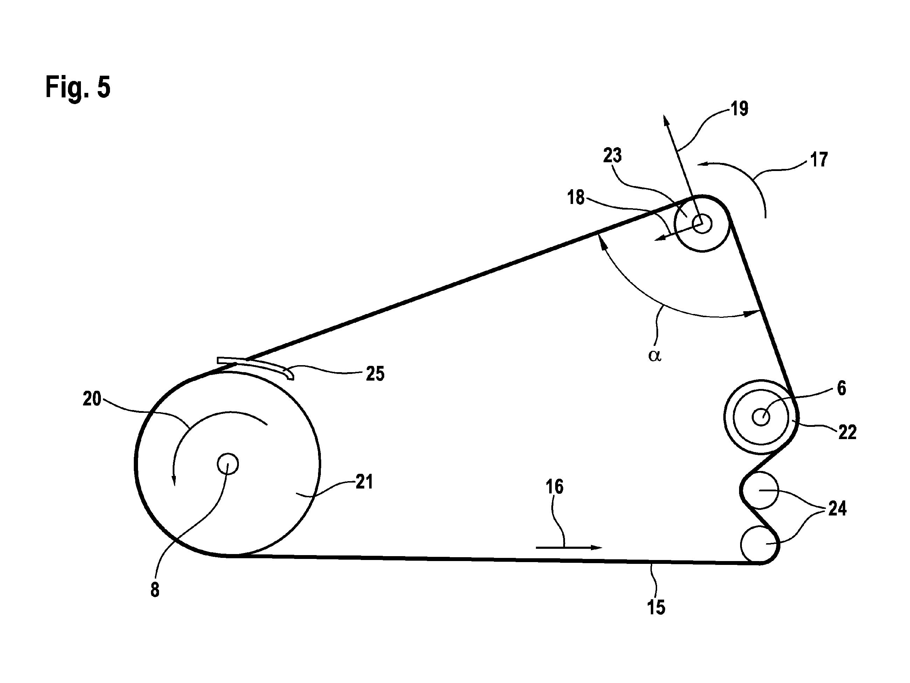

Figur 5 zeigt ein drittes Ausführungsbeispiel des Elektrofahrrades 1. Gleiche bzw. funktional gleiche Bauteile sind in allen Ausführungsbeispielen mit denselben Bezugszeichen versehen. Der Übersichtlichkeit halber ist in Figur 5 lediglich der Antriebsstrang des Elektrofahrrades 1 dargestellt. Im dritten Ausführungsbeispiel befindet sich das dritte Transmissionsrad 23, insbesondere die Achse des dritten Transmissionsrades 23, über einer imaginären Linie von der Tretkurbelwelle 8 zur Hinterradaufhängung 6. Des Weiteren befindet sich das dritte Transmissionsrad 23 in Fahrtrichtung betrachtet hinter dem ersten Transmissionsrad 21. Dadurch läuft das Antriebsmittel wie bei herkömmlichen Fahrrädern in das erste Transmissionsrad 21 ein und infolgedessen kann eine herkömmliche Antriebsmittelführung 25, insbesondere Kettenführung oder Kettenschaltung, verwendet werden.

Die Umlaufrichtung zum Vorwärtsfahren ist mit dem Bezugszeichen 16 eingezeichnet.

Die Position des Elektromotors 11 mit dem dritten Transmissionsrad 23 im Träger 9 ist bevorzugt einstellbar, so dass stets der Winkel α auf 90° justiert werden kann und auch die Kette gespannt werden kann.

## Patentansprüche

1. Elektrofahrrad (1), umfassend:
- eine Tretkurbel (7) mit einem ersten Transmissionsrad (21),
- ein angetriebenes Rad (4), insbesondere Hinterrad, mit einem zweiten Transmissionsrad (22),
- einen Elektromotor (11) mit einem dritten Transmissionsrad (23), und
- ein das erste, zweite und dritte Transmissionsrad (21, 22, 23) umschlingendes, endlos umlaufendes Antriebsmittel (15).

2. Elektrofahrrad nach Anspruch 1, **dadurch gekennzeichnet, dass** das erste, zweite und dritte Transmissionsrad (21, 22, 23) Kettenräder sind, und das Antriebsmittel (15) eine Kette ist.

3. Elektrofahrrad nach einem der vorhergehenden Ansprüche, **dadurch gekennzeichnet, dass** das Antriebsmittel (15) durch das dritte Transmissionsrad (23) um einen Winkel (α) umgelenkt wird, wobei der Winkel (α) zwischen 80° und 100°, vorzugsweise zwischen 85° und 95°, besonders vorzugsweise 90°, beträgt.

4. Elektrofahrrad nach einem der vorhergehenden Ansprüche, **gekennzeichnet durch** einen Sensor (26) zum Messen der über die Tretkurbel (7) auf das dritte Transmissionsrad (23) aufgebrachten Tretkraft (18).

5. Elektrofahrrad nach Anspruch 4, **dadurch gekennzeichnet, dass** der Sensor (26) an einer Aufhängung des Elektromotors (11) oder an einem Lager im Elektromotor (11) oder an dem dritten Transmissionsrad (23) angeordnet ist.

6. Elektrofahrrad nach einem der vorhergehenden Ansprüche, **dadurch gekennzeichnet, dass** zum Vorwärtsfahren des Elektrofahrrades (1) eine Umlaufrichtung (16) des Antriebsmittels (15) vorgegeben ist, und das dritte Transmissionsrad (23) in Umlaufrichtung (16) nach dem zweiten Transmissionsrad (22) und vor dem ersten Transmissionsrad (21) angeordnet ist.

7. Elektrofahrrad nach einem der vorhergehenden Ansprüche, **dadurch gekennzeichnet, dass** die Achse des dritten Transmissionsrades (23) oberhalb der Achse des ersten Transmissionsrades (21) und in Fahrtrichtung hinter der Achse des ersten Transmissionsrades (21) angeordnet ist.

8. Elektrofahrrad nach einem der Ansprüche 1 bis 6, **dadurch gekennzeichnet, dass** die Achse des dritten Transmissionsrades (23) unterhalb der Achse des ersten Transmissionsrades (21) angeordnet ist.

9. Elektrofahrrad nach einem der vorhergehenden Ansprüche, **dadurch gekennzeichnet, dass** das erste Transmissionsrad (21) koaxial zu einer Tretkurbelwelle (8) der Tretkurbel (7) angeordnet ist, und/oder dass das zweite Transmissionsrad (22) koaxial zum angetriebenen Rad (4) angeordnet ist.

10. Antriebsbausatz zum elektrischen Antrieb eines Fahrrades (1), wobei das Fahrrad (1) einen Fahrradrahmen (2), eine Tretkurbel (7) mit einem ersten Transmissionsrad (21), ein angetriebenes Rad (4), insbesondere Hinterrad, mit einem zweiten Transmissionsrad (22), und ein das erste und zweite Transmissionsrad (21, 22) umschlingendes, endlos umlaufendes Antriebsmittel umfasst,
- wobei der Antriebsbausatz
- einen Träger (9) mit Montageelementen (10) zur Montage des Trägers (9) am Fahrradrahmen (2), und
- einen im Träger (9) angeordneten Elektromotor (11) mit einem dritten Transmissionsrad (23) umfasst, und
- wobei das dritte Transmissionsrad (23) zur Umschlingung von dem Antriebsmittel (15) angeordnet ist.

11. Antriebsbausatz nach Anspruch 10, **dadurch gekennzeichnet, dass** im Träger (9) eine Batterie (12) und/oder eine Batterieaufnahme angeordnet ist.

12. Antriebsbausatz nach einem der Ansprüche 10 oder 11, **dadurch gekennzeichnet, dass** die Position des Elektromotors (11) samt drittem Transmissionsrad (23) im Träger (9) verstellbar ist.

13. Antriebsbausatz nach einem der Ansprüche 10 bis 12, **dadurch gekennzeichnet, dass** zumindest drei zueinander versetzte Montagelemente (10) am Träger (9) vorgesehen sind.

14. Antriebsbausatz nach einem der Ansprüche 10 bis 13, **gekennzeichnet durch** einen Sensor (26) zum Messen der über die Tretkurbel (7) auf das dritte Transmissionsrad (23) aufgebrachten Tretkraft (18).

15. Antriebsbausatz nach Anspruch 14, **dadurch gekennzeichnet, dass** der Sensor (26) an einer Aufhängung des Elektromotors (11) oder an einem Lager im Elektromotor (11) oder an dem dritten Transmissionsrad (23) angeordnet ist.
